# EUROPEAN PATENT APPLICATION

(11) **EP 4 745 833 A1**
(43) Date of publication of application: **20.05.2026**
(21) Application number: 24839946.1
(22) Date of filing: 26.06.2024
(51) Int. Cl.: G06K 19/077, G06K 19/12

(54) **NON-CONTACT-TYPE METAL CARD AND METHOD FOR MANUFACTURING SAME**

(30) Priority: 12.07.2023 KR 20230090384
(71) Applicant: N Able Co., Ltd., Paju-si Gyeonggi-do 10904 (KR)
(72) Inventor: KIM, Jin Hwa, Paju-si Gyeonggi-do 10906 (KR)
(74) Representative: Gulde & Partner
(86) International application number: PCT/KR2024/008848
(87) International publication number: WO 2025/014132

(57) **Abstract**

The present disclosure relates to a non-contact-type metal card including: a primary coil antenna having a primary coil mounted on an antenna substrate; and a metal body made of a metal material, into which the primary coil antenna and a card chip are assembled, in which the metal body has a slit that is opened on one side and extends in a loop shape, and forms a plurality of conductive paths partitioned and extending from each other by the slit to constitute a secondary coil.

## Description

### [Technical Field]

The present disclosure relates to a non-contact-type metal card and a method for manufacturing the same.

### [Background Art]

In general, cards are classified into magnetic cards using a magnetic strip, smart cards using an IC chip, and hybrid cards thereof according to a recording method, and the smart cards are classified into contact and non-contact-type manners and combination cards thereof according to the reading method, and non-contact-type types are further classified into proximity communication (NFC) cards that can be read only at a distance of several to several tens of centimeters and RF cards that can be read from a longer distance. Typically, these methods are often provided in duplicate.

Meanwhile, plastic cards are generally issued to specific members to defer payment for goods or services for a certain period of time. The plastic cards are mainly used in place of cash, such as credit cards, cash cards, and transportation cards, or widely utilized in various forms like medical cards, membership cards, and so on. Nowadays, customers are provided with a variety of differentiated plastic cards based on their credit ratings.

Among these, special cards, such as gold cards and platinum cards, produced for VIP customers with high credit ratings, are coated in gold or silver to create a more premium feel.

However, the above-described special cards are designed to display gold and silver hues through a printing process in which gold or silver is mixed into pigments. Therefore, the gold and silver powders mixed into the pigments not only avoid using pure gold or pure silver, but are also mixed with other pigments, adhesives, and the like, making it impossible to achieve the high-gloss texture emitted from pure metals.

Furthermore, unlike pure metals of which the gloss and texture do not change at all, the gold and silver powders have properties such as deteriorating due to humidity, temperature conditions, and the like. Therefore, the prolonged use of the plastic card may lead to discoloration and deterioration of the coating, diminishing its gloss. As a result, it is not possible to provide high-quality cards.

Accordingly, recently, metal cards made of metallic materials have been used as an alternative. The metal cards may provide a sense of weight, and thus, are becoming even more premium cards. Accordingly, the metal cards have responded to market demands by using metal with a thickness of 0.6 to 0.7mm, compared to the 0.3 to 0.4mm thickness that is commonly used.

However, as the conventional metal cards, slit-type metal cards containing PVC materials harmful to the human body are provided, which is harmful to the human body.

In addition, the conventional metal cards often fail to be recognized depending on a position of a reader, as an antenna is formed entirely within a narrow area. That is, the conventional metal cards have difficulties in ensuring the quality of a metal processing surface, and by minimizing the antenna size to secure the uniformity of upper and lower bonding surfaces, have a problem in that the recognition distance characteristics is significantly inferior compared to existing PVC materials.

### [Disclosure]

### [Technical Problem]

Therefore, the present disclosure was conceived to address these issues. The present disclosure is directed to providing a non-contact-type metal card that may be harmless to the human body and offer improved recognition distance characteristics, and a method for manufacturing the same.

### [Technical Solution]

The present disclosure may include the following embodiments in order to achieve the above object.

In one general aspect, a non-contact-type metal card includes: a primary coil antenna having a primary coil mounted on an antenna substrate; and a metal body made of a metal material, into which the primary coil antenna and a card chip are assembled, in which the metal body has a slit that is opened on one side and extends in a loop shape, and forms a plurality of conductive paths partitioned and extending from each other by the slit to constitute a secondary coil.

The metal body may further include: an opening opened so that a card chip is installed; and a milling portion forming an inward groove on a lower surface thereof and having the primary coil antenna installed therein.

The primary coil antenna may further include a tuning capacitance portion that is electrically connected to the antenna substrate.

The metal body may include a first connection terminal that electrically contacts the first connector terminal and the second connector terminal of the primary coil antenna, respectively, to form an end point of a loop-shaped primary coil or a starting point of the secondary coil, and a second connection terminal that forms an end point of the secondary coil.

The second connection terminal may be partitioned from other regions by the slit.

In another general aspect, a method for manufacturing a non-contact-type metal card includes: processing an opening into which a card chip is assembled in a metal body and a slit extending in a loop shape from one side; injecting a molding material into the slit and opening and molding the molding material, and forming a resin layer on upper and lower surfaces of the metal body; bonding a printing sheet to the metal body on which the resin layer is formed; processing a recessed groove, which matches a shape of the card chip, in the molding material; and assembling a card chip on an upper surface of the molding material, in which, in the processing of the slit, a conductive path, which is partitioned into a loop shape by the slit, is formed between a first connection terminal that is electrically connected to a first connector terminal of a primary coil antenna and a second connection terminal that is electrically connected to a second connector terminal of the primary coil antenna by the slit extending in the loop shape from one side of the metal body.

The processing of the metal body may further include processing an inward milling portion on the lower surface of the metal body to accommodate the primary coil antenna and a receiving groove to accommodate the tuning capacitance portion 133.

The second connection terminal may be partitioned to be insulated from other regions by the slit, but may be electrically connected to the end point of the conductive path.

In still another general aspect, a method for manufacturing a non-contact-type metal card includes: processing an opening into which a card chip is assembled in a metal body and a slit extending in a loop shape from one side; injecting a molding material into the slit and opening and molding the molding material, and forming a resin layer on upper and lower surfaces of the metal body; forming the resin layer on upper and lower surfaces of a metal card by injecting the molding material, and then processing the resin layer on the lower surface to form a milling groove; bonding a magnetic stripe tape to the milling groove by a laminating method; printing on the upper and lower surfaces of the metal body; processing a recessed groove, which matches a shape of the card chip, in the molding material; and assembling the card chip on an upper surface of the molding material, in which, in the processing of the slit, a conductive path, which is partitioned into a loop shape by the slit, is formed between a first connection terminal that is electrically connected to a first connector terminal of a primary coil antenna and a second connection terminal that is electrically connected to a second connector terminal of the primary coil antenna by the slit extending in the loop shape from one side of the metal body.

### [Advantageous Effects]

According to the present disclosure, by processing the metal body with the loop-shaped slit, the entire area of the metal body may be utilized as a secondary coil antenna, enabling improved recognition distance characteristics compared to conventional cards. Additionally, the removal of PVC material results in an effect that is harmless to the human body.

### [BRIEF DESCRIPTION OF THE DRAWINGS]

FIG. 1 is a circuit diagram including a metal card and a reader.
FIG. 2 is a perspective view illustrating a non-contact-type metal card according to the present disclosure.
FIG. 3 is a plan view illustrating a metal body of FIG. 1.
FIG. 4 is a cross-sectional view taken along line A-A' of FIG. 2.
FIG. 5 is a cross-sectional view taken along line B-B' of FIG. 2.
FIG. 6 is a cross-sectional view taken along line C-C' of FIG. 2.
FIG. 7 is a diagram illustrating a signal flow.
FIGS. 8A to 8H are diagrams illustrating an embodiment of a method for manufacturing a non-contact-type metal card according to the present disclosure.
FIGS. 9A to 9I are diagrams illustrating another embodiment.
FIGS. 10A to 10J are diagrams illustrating another embodiment.

### [Best Mode]

The present disclosure may be variously modified and have several exemplary embodiments. Therefore, specific exemplary embodiments of the present disclosure will be illustrated in the accompanying drawings and be described in detail. This is not intended to limit the present disclosure to specific embodiments, and it should be understood that this corresponds to any one of all modifications, equivalents or substitutes included in the spirit and scope of the present disclosure for connecting and/or fixing structures extending in different directions.

Terms used in the present specification are used only in order to describe specific exemplary embodiments rather than limiting the present disclosure. Singular expressions are intended to include plural expressions unless the context clearly represents otherwise.

It should be further understood that terms "include" or "have" used in the present specification specify the presence of features, numerals, steps, operations, components, parts mentioned in the present specification, or combinations thereof, but do not preclude the presence or addition of one or more other features, numerals, steps, operations, components, parts, or combinations thereof.

Hereinafter, preferred embodiments of a non-contact-type metal card according to the present disclosure and a method for manufacturing the same will be described with reference to the accompanying drawings.

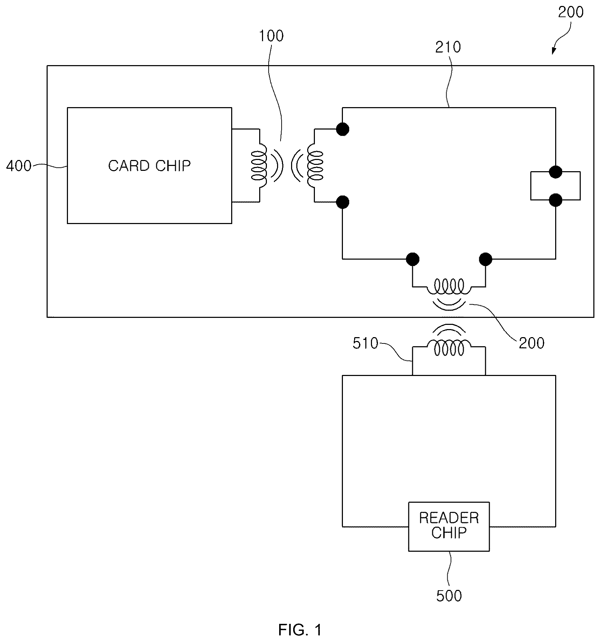

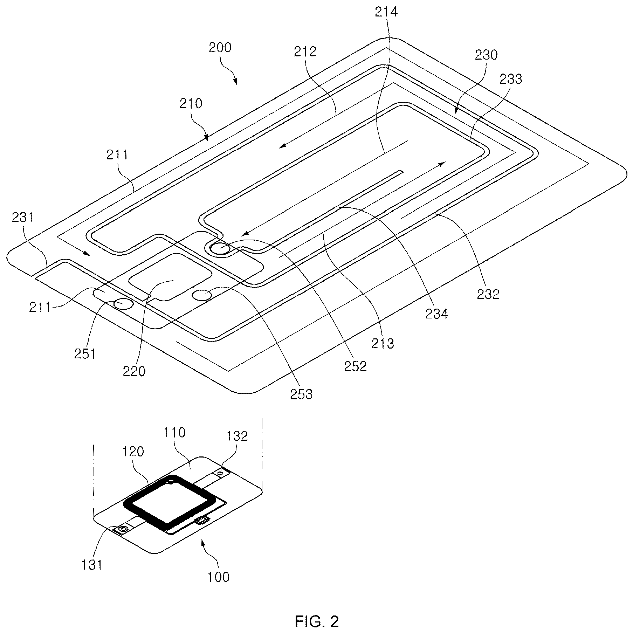

FIG. 1 is a circuit diagram including a metal card and a reader, and FIG. 2 is a perspective view illustrating the non-contact-type metal card according to the present disclosure.

Referring to FIGS. 1 and 2, the metal card according to the present disclosure may include a metal body 200 made of a metal material that functions as a secondary coil antenna, and a primary coil antenna 100 installed on the metal body 200.

The primary coil antenna 100 receives a signal from a card chip 400, and the secondary coil antenna outputs a signal from the card chip 400 received from the primary coil antenna 100 to the reader.

Among these, the primary coil antenna 100 is installed on the metal body 200, and the secondary coil antenna is the metal body 200 itself which is partitioned by a slit extending in a loop shape within the metal body 200 to be described below.

In addition, the card chip 400 may be assembled so as to be stacked on the metal body 200 where the primary coil antenna 100 is assembled.

The reader is configured to include a reader chip 500 and a reader antenna 510, and the reader antenna 510 may recognize the secondary coil antenna.

That is, conventionally, the secondary coil antenna of the metal card was configured in a narrow area, resulting in deteriorating recognition distance characteristics. However, the present disclosure may implement the metal body 200 itself as the secondary coil antenna, thereby expanding the antenna area and obtaining significantly superior recognition distance characteristics compared to conventional methods.

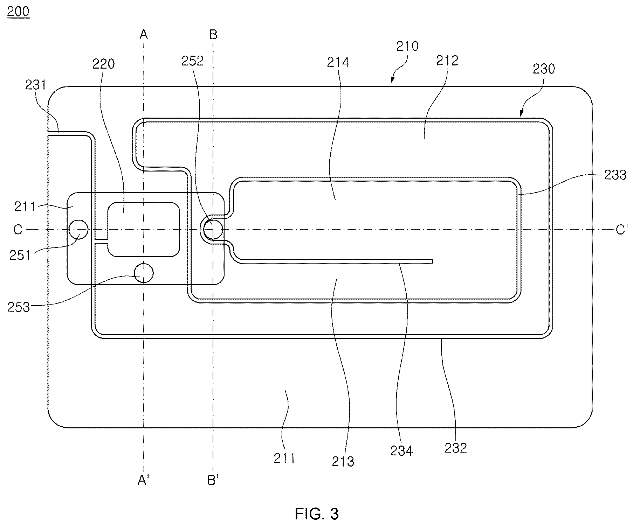

The primary coil antenna 100 and the metal body 200 will be described in more detail with reference to FIGS. 3 to 6.

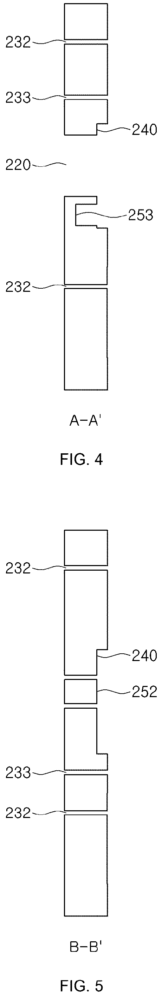

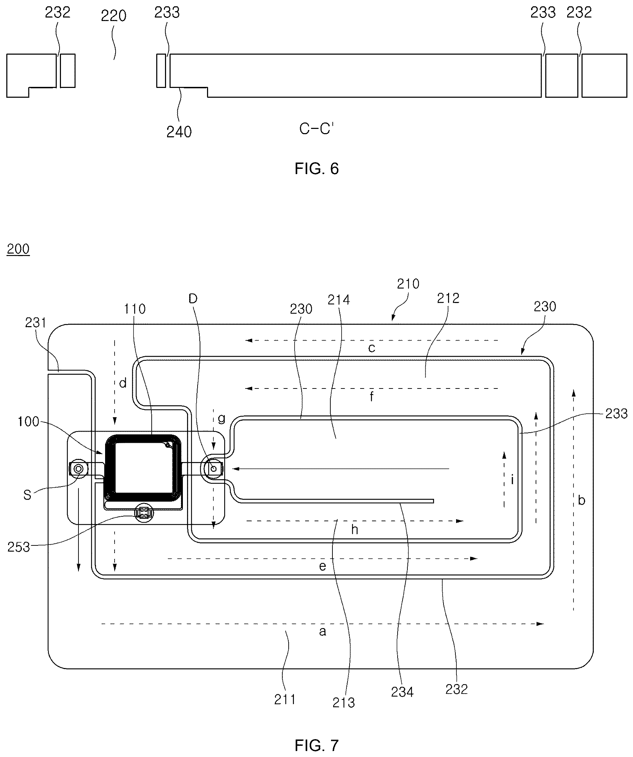

FIG. 3 is a plan view illustrating the metal body 200 of FIG. 1, FIG. 4 is a cross-sectional view taken along line A-A' of FIG. 2, FIG. 5 is a cross-sectional view taken along line B-B' of FIG. 2, and FIG. 6 is a cross-sectional view taken along line C-C' of FIG. 2.

Referring to FIGS. 3 to 6, the primary coil antenna 100 may include a flexible antenna substrate 110, a primary coil 120 formed in a loop-shaped pattern on the upper and lower surfaces of the antenna substrate 110, and a first connector terminal 131 and a second connector terminal 132 extending from the primary coil 120.

The antenna substrate 110 is a flexible printed circuit board (e.g., FPCB) with a predetermined width and is coupled to a predetermined position on the metal body 200.

The primary coil 120 forms a loop-shaped pattern on both surfaces of the antenna substrate 110.

The first connector terminal 131 and the second connector terminal 132 are assembled to be electrically connected to the metal body 200, thereby inputting and outputting signals.

Here, the first connector terminal 131 is electrically connected to a first connection terminal 251 of the metal body, which will be described later, and the second connector terminal 132 is electrically connected to a second connection terminal 252 of the metal body, and the electrical connections are made using an anisotropic conductive paste (ACP) bonding method, an anisotropic conductive film (ACF) bonding method, a soldering method, or a conductive double-sided tape bonding method.

In addition, the primary coil antenna 100 may include a tuning capacitance portion 133 on the antenna substrate 110 that compensates for the capacitance of the secondary coil.

The tuning capacitance portion 133 may be configured as an MLCC-type chip capacitor or a pattern capacitor formed of an arrangement of upper and lower conductive patterns on the antenna substrate.

The metal body 200 is a metal substrate, and is partitioned into regions that are partitioned and interconnected by the slit extending from one side, such that the body itself functions as the secondary coil antenna. To this end, the metal body 200 may include a conductive portion 210 that forms a conductive path through which a signal is transmitted, an opening 220 in the form of a metal substrate to which the primary coil antenna 100 is fastened, and a slit portion 230 that opens from one side of the metal body 200 and extends in a loop shape.

The opening 220 is opened in the metal body 200 to form an opened space in which the card chip 400 is installed.

The milling portion 240 is formed as an upward groove on a lower surface of the metal body 200 and forms a space for accommodating the primary coil antenna 100. Here, the milling portion 240 may be formed around a region including the opening 220.

Furthermore, the milling portion 240 may include a first connection terminal 251 and a second connection terminal 252 that electrically connect the first connector terminal 131 and the second connector terminal 132 of the primary coil antenna 100. Among those, the second connection terminal 252 is partitioned from other regions by a fourth slit 234, as illustrated in FIG. 2.

Furthermore, the milling portion 240 may further include a receiving groove 253 for accommodating the tuning capacitance portion 133.

The first connection terminal 251 and the second connection terminal 252 are electrically connected to the first connector terminal 131 and the second connector terminal 132 of the primary coil antenna 100 on the lower surface of the metal body 200. Here, the first connection terminal 251 may be an end point of the loop-shaped primary coil 120 or a starting point of the secondary coil. In addition, the second connection terminal 252 is the end point of the secondary coil and is partitioned from other regions by the fourth slit 234. In this case, the slit may additionally extend to form a slit region in order to increase the number of turns of the loop.

Here, the first connection terminal 251 is electrically connected to a first conductive path 111, which will be described below, but is partitioned by a slit so as to be insulated from other regions, and the second connection terminal 252 is partitioned to be insulated from other regions by the slit but can be electrically connected to the end point of the conductive path.

The receiving groove 253 forms an inward groove in the milling portion 240 to accommodate a tuning capacitor.

The slit portion 230 is formed as a slit that is partially opened at one side of the metal body 200 and extends inward. In this case, slits 212 to 234 may include a first slit 231 that is opened at one side of the metal body 200, and second to fourth slits 232 to 234 that sequentially extend in a loop shape from the first slit 231.

Among those, the fourth slit 234 extends in a protruding shape in the region of the milling portion 240 according to the shape of the second connection terminal 252, and then extends in a straight line to form the end point of the slit portion 230 originating from the first slit 231. That is, the fourth slit 234 insulates the second connection terminal 252 from the second and third conductive paths 212 and 213 and is electrically connected to the fourth conductive path 214.

The first slit 231 to the fourth slit 234 extend from the first slit 231 and form a single slit in its entirety. However, different signs and names are assigned according to the position of the slit for the description of the subsequent conductive portion 210.

The conductive portion 210 is partitioned and interconnected by the slits 231 to 234 and functions as a secondary coil antenna.

For example, the conductive portion 210 includes a first conductive path 211 through which a signal starting from a starting point S implemented by the first connection terminal 251 is conducted, a second conductive path 212 formed in a region extending from the first conductive path 211 and partitioned from the first conductive path 211 by a second slit 232, a third conductive path partitioned from the second conductive path 212 by a third slit 233 but extending from the second conductive path 212, and the fourth conductive path 214 extending from the third conductive path 213 but partitioned from the third conductive path 213 by the fourth slit 234. Here, the conductive path as described above may additionally extend to increase the number of turns of the loop.

The first conductive path 211 to the fourth conductive path 214 extend in a loop shape by the first to fourth slits 231 to 234 and transmit signals to an end point D implemented by the second connection terminal 252.

The first to fourth conductive paths 211 to 214 are sequentially connected in a loop shape to form a single conductive path partitioned by the first to fourth slits 231 to 234 extending as a single unit, thereby implementing the secondary coil.

In this case, the starting point S of the secondary coil may be the end point (first connection terminal 251) of the primary coil 120, and the end point of the secondary coil may be the second connection terminal 252 to which the fourth conductive path 214, which is an inner area of the fourth slit 234, is connected.

That is, the secondary coil sequentially extends from the starting point S where the first connector terminal 131 of the primary coil 120 is connected to the first conductive path 211, the second conductive path 212, the third conductive path 213, and the fourth conductive path 214, and extends to the end point D where the second connector terminal 132 is bonded.

In this way, in the present disclosure, the metal body 200 itself is applied as a secondary coil antenna, which can resolve the issue of a short recognition distance caused by the antenna being formed in a narrow area, as identified in the prior art.

The metal card according to the present disclosure includes the above-described configuration, and a method for manufacturing the metal card will be described below.

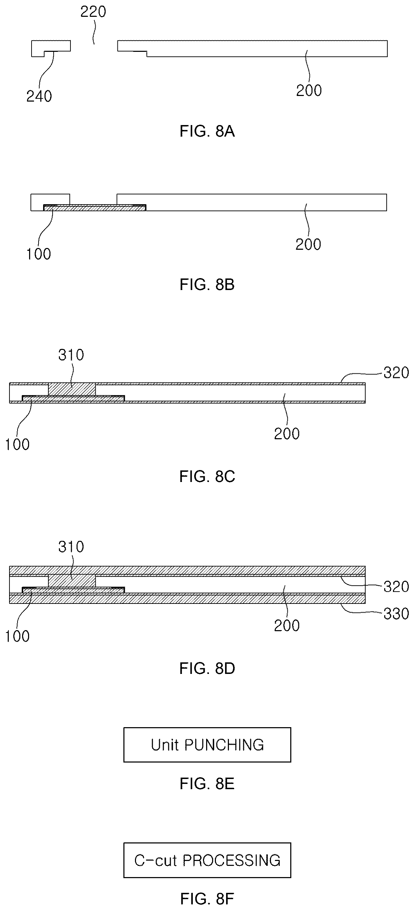

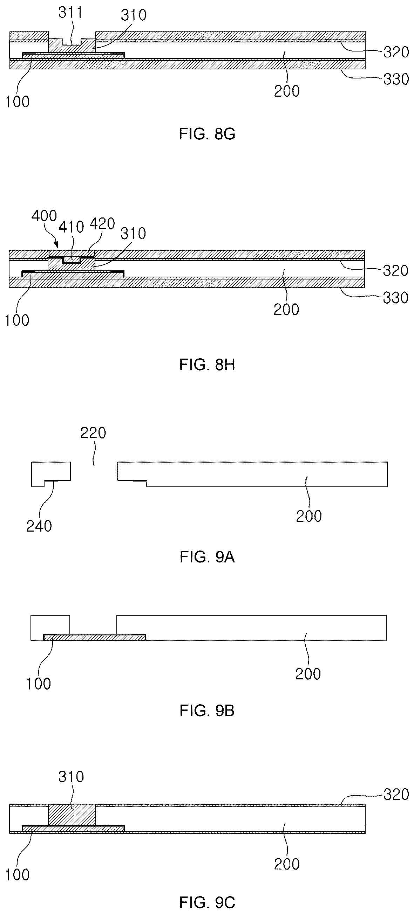

The method for manufacturing a non-contact-type metal card according to the present disclosure may include various embodiments depending on the thickness of the metal body 200. It will be described with reference to FIGS. 8 to 10 below.

FIGS. 8A to 8H are diagrams illustrating an embodiment of a method for manufacturing a non-contact-type metal card according to the present disclosure.

Referring to FIGS. 8A to 8H, one embodiment of the present disclosure sequentially performs a step of processing a metal body 200 (FIG. 8A), a step of assembling a primary coil antenna 100 (FIG. 8B), a step of molding slits and openings in the metal body (FIG. 8C), a step of bonding a printed sheet (FIG. 8D), a step of punching (FIG. 8E), a step of C-Cut (FIG. 8F), a step of milling a chip pocket (FIG. 8G), and a step of inserting a chip (FIG. 8H).

Referring to FIG. 8A, the step of processing the metal body 200 is a step of processing the metal body 200 to process the opening 220 and slit. The slit is processed to start from one side of the metal body 200 and extend inward in a loop shape of 3 to 5 turns. Therefore, the metal body 200 may be processed into the loop-shaped secondary coil shape while the region is partitioned by the slit.

Here, the metal body 200 may have a shape in which a plurality of metal bodies 200 are configured within a single sheet. Therefore, the plurality of metal body 200 may be processed simultaneously. Sheets for mass-processing the metal body 200 are generally known techniques, and therefore, a description thereof will be omitted.

Furthermore, in the step of processing the metal body 200, a receiving groove may be processed on the lower surface of the metal body 200 to accommodate the primary coil antenna 100 and to accommodate the milling portion 240 and the tuning capacitance portion 133 on the lower surface.

Referring to FIG. 8B, the step of assembling the primary coil antenna 100 is a step of inserting and assembling the antenna substrate 110, which includes the primary coil 120, the first connector terminal 131 connected to the primary coil 120, and the second connection terminal and the tuning capacitance portion 133, into the milling portion 240.

Referring to FIG. 8C, the step of molding the slit and opening is a step of injecting a molding material 310, such as epoxy, into the slit and opening and molding the molding material 310. Here, a resin layer 320 is formed on the upper and lower surfaces of the metal body 200 after molding to perform the insulation and protection functions on the upper and lower surfaces of the metal body 200.

Referring to FIG. 8D, the step of boding the printing sheet is a step of bonding the printing sheet to the upper and lower surfaces of the metal body 200 on which the resin layer 320 is formed after molding. Here, the printing sheet may be bonded through the laminating process.

Referring to FIG. 8E, the step of punching is a step of punching and separating the plurality of metal bodies 200 implemented within a single sheet.

Referring to FIG. 8F, the step of C-Cut is a step of processing C-Cut the cut surfaces of the plurality of metal bodies 200 separated from the single sheet after the punching. Since the C-Cut processing is a well-known technique, its description will be omitted.

Referring to FIG. 8G, the step of milling the chip pocket is a step of processing a recessed groove 311 in the molding material 310. The worker processes the molding material 310 and the printing sheet to form a recessed groove 311 on the upper end of the molding material 310, thereby processing the molding material into a shape for assembling the card chip 400.

Referring to FIG. 8H, the step of inserting the chip is a step of assembling the card chip 400 onto the upper surface of the molding material 310. Here, the card chip 400 is formed by mounting a semiconductor chip 420 on a upper surface of a chip substrate 410 and is installed in the recessed groove 311 of the molding material 310 in a reverse direction. In this case, the molding material 310 and the card chip 400 are bonded using an adhesive means such as a hot melt or adhesive film.

Through the above process, the manufacturing of the metal card according to one embodiment of the present disclosure is completed. Furthermore, the metal card according to the present disclosure may include other embodiments depending on its thickness. For example, the above embodiment applies the metal body 200 of 0.4T. When a thicker metal body 200 (e.g., 0.6T or thicker) is applied, the metal card may be manufactured according to the following embodiments.

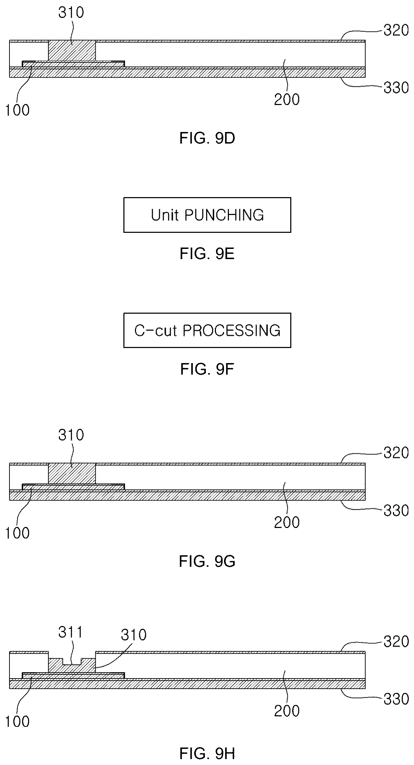

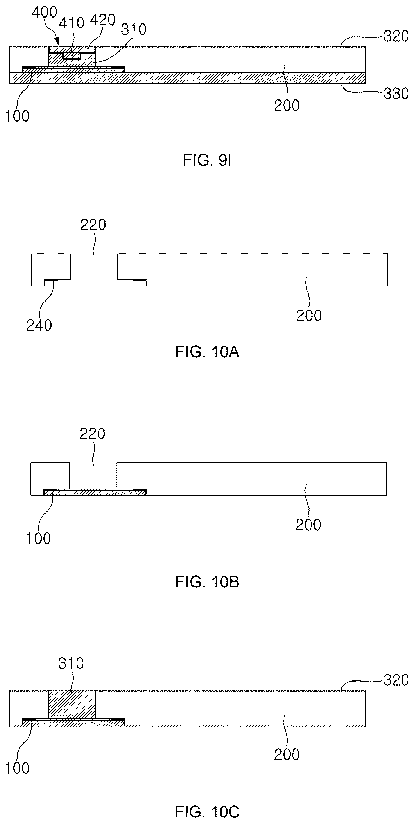

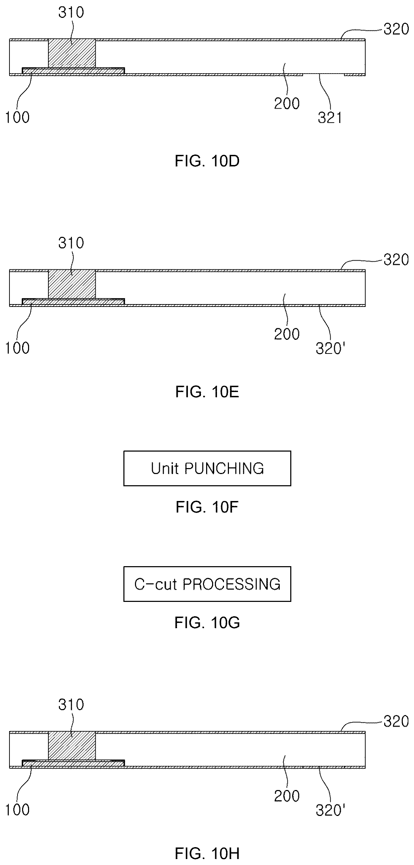

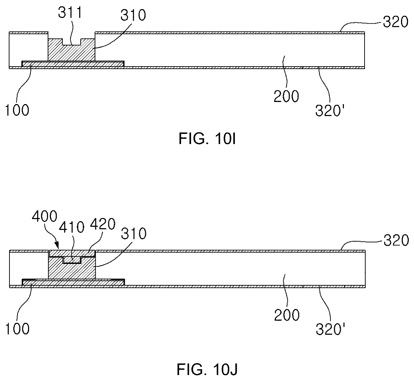

This will be explained with reference to FIGS. 9 and 10.

FIGS. 9A to 9I are process drawings illustrating another embodiment of the present disclosure.

Referring to FIGS. 9A to 9I, another embodiment of the present disclosure may include a step of processing the metal body 200 (FIG. 9A), a step of assembling the primary coil antenna 100 substrate (FIG. 9B), a step of molding the slit and the opening (FIG. 9C), a step of bonding the printing sheet to the lower surface (FIG. 9D), a step of punching (FIG. 9E), a step of C-cut processing (FIG. 9F), a step of printing on the upper surface of the metal body 200 (FIG. 9G), a step of milling the card chip pocket (FIG. 9H), and a step of inserting the card chip (FIG. 9I).

Referring to FIG. 9A, the step of processing the metal body 200 is a step of processing the metal body 200 to process the opening 220 and slit. The slit is processed to start from one side of the metal body 200 and extend inward in a loop shape of 3 to 5 turns. Therefore, the metal body 200 may be processed into the loop-shaped secondary coil shape, with the region partitioned by the slit.

Here, the metal body 200 may have a shape in which a plurality of metal bodies 200 are configured within a single sheet. Therefore, the plurality of metal body 200 may be processed simultaneously. Sheets for mass-processing the metal body 200 are generally known techniques, and therefore, a description thereof will be omitted.

Furthermore, in the step of processing the metal body 200, a receiving groove may be processed on the lower surface of the metal body 200 to accommodate the primary coil antenna 100 and to accommodate the milling portion 240 and the tuning capacitance portion 133 on the lower surface.

Referring to FIG. 9B, the step of assembling the primary coil antenna 100 is a step of inserting and assembling the antenna substrate 110, which includes the primary coil 120, the first connector terminal 131 connected to the primary coil 120, and the second connection terminal and the tuning capacitance portion 133, into the milling portion 240.

Referring to FIG. 9C, the step of molding the slit and opening is a step of injecting a molding material 310, such as epoxy, into the slit and opening and molding the molding material 310. Here, a resin layer 320 is formed on the upper and lower surfaces of the metal body 200 after molding to perform the insulation and protection functions on the upper and lower surfaces of the metal body 200.

Here, the slits 231 to 234 are processed to form the conductive paths mutually portioned and extending in a loop shape between the first connection terminal 251 that extends in the loop shape from one side of the metal body 200 and is electrically connected to the first connector terminal 131 of the primary coil antenna 100 and the second connection terminal 252 that is electrically connected to the second connector terminal 132 of the primary coil antenna 100.

Referring to FIG. 9D, the step of boding the printing sheet is a step of bonding the printing sheet 330 to the lower surface of the metal body 200 on which the resin layer 320 is formed after molding. Here, the printing sheet 330 may be bonded to either the upper or lower surface of the metal body through the laminating process. In this case, the printing sheet 330 may include a magnetic stripe tape or film on which the card information is recorded.

Referring to FIG. 9E, the step of punching is a step of punching and separating the plurality of metal bodies 200 implemented within a single sheet. The plurality of metal bodies 200 may be provided within a single sheet. Therefore, the step of punching (e) separates the plurality of metal bodies 200 included within such a sheet.

Referring to FIG. 9F, the step of C-Cut processing is a step of C-Cut processing the cut surfaces of the plurality of metal bodies 200 separated from the single sheet after the punching. Since the C-Cut processing is a well-known technique, its description will be omitted.

Referring to FIG. 9G, the step of printing is a step of printing a selected design, such as a predetermined shape or pattern, on the resin layer 320 formed on the upper surface of the metal body 200.

Referring to FIG. 9H, the step of milling the card chip pocket is a step of processing the recessed groove 311 in the molding material 310. The worker processes the molding material 310 and the printing sheet to form a recessed groove 311 on the upper end of the molding material 310, thereby processing the molding material into a shape for assembling the card chip 400.

Referring to FIG. 9I, the step (i) of inserting the card chip is a step of assembling the card chip 400 on the upper surface of the molding material 310. Here, the card chip 400 is formed by mounting a semiconductor chip 420 on a upper surface of a chip substrate 410 and is installed in the recessed groove 311 of the molding material 310 in a reverse direction. In this case, the molding material 310 and the card chip 400 are bonded using an adhesive means such as a hot melt or adhesive film.

Another embodiment of the above process is characterized by applying the metal body 200 thicker than 0.4T (e.g., 0.6T) in one embodiment, and forming the printed layer on the upper surface of the metal body 200.

FIGS. 10A to 10J are process drawings illustrating another embodiment of the present disclosure.

Referring to FIGS. 10A to 10J, another embodiment of the present disclosure may include a step of processing the metal body 200 (FIG. 10A), a step of assembling the primary coil antenna 100 substrate (FIG. 10B), a step of molding the slit and opening (FIG. 10C), a step of processing the milling groove 321 on the lower surface of the metal body 200 (FIG. 10D), a step of bonding the magnetic stripe tape to the lower surface of the metal body 200 (FIG. 10E), the punching step (FIG. 10F), the step of C-cut processing (FIG. 10G), a step of printing on the upper surface of the metal body 200 (FIG. 10H), a step of milling the card chip pocket (FIG. 10I), and a step of inserting the card chip (FIG. 10J).

Referring to FIG. 10A, the step of processing the metal body 200 is a step of processing the metal body 200 to process the opening 220 and slit. The slit is processed to start from one side of the metal body 200 and extend inward in a loop shape of 3 to 5 turns.

In addition, the metal body 200 is processed into the loop-shaped secondary coil shape while the region is partitioned by the slit.

In addition, the metal body 200 is processed with the receiving groove on its lower surface to accommodate the primary coil antenna 100, and with the receiving groove on the lower surface to accommodate the milling portion 240 and the tuning capacitance portion 133.

.Here, the metal body 200 is characterized by being thicker (e.g., 0.8T) than another embodiment.

Referring to FIG. 10B, the step of assembling the primary coil antenna 100 is a step of inserting and assembling the antenna substrate 110, which includes the primary coil 120, the first connector terminal 131 connected to the primary coil 120, and the second connection terminal and the tuning capacitance portion 133, into the milling portion 240.

Referring to FIG. 10C, the step of molding the slit and opening is a step of injecting a molding material 310, such as epoxy, into the slit and opening and molding the molding material 310. Here, a resin layer 320 is formed on the upper and lower surfaces of the metal body 200 after molding to perform the insulation and protection functions on the upper and lower surfaces of the metal body 200.

The step (d) of processing the milling groove 321 on the lower surface of the metal body 200 is a step of forming the groove 321 by milling a portion of the lower surface of the resin layer 320 formed on the upper and lower surfaces of the metal body 200 after the molding. This milling groove 321 of the resin layer 320 forms a space where a magnetic stripe tape 320' is bonded.

The magnetic stripe tape 320' is a tape (or film) on which the card information is recorded, as an "MS tape."

The step (e) of bonding the magnetic stripe tape 320' to the lower surface of the metal body 200 is a step of bonding the magnetic stripe tape 320' to the milling groove 321 formed on the lower surface of the metal body 200. Here, the magnetic stripe tape 320' may be bonded through the laminating process.

Referring to FIG. 10F, the step of punching is a step of punching and separating the plurality of metal bodies 200 implemented within a single sheet. The plurality of metal bodies 200 may be provided within a single sheet. Therefore, the punching step separates the plurality of metal bodies 200 included within a single sheet.

Referring to FIG. 10G, the step of C-Cut processing is a step of C-Cut processing the cut surfaces of the plurality of metal bodies 200 separated from the single sheet after the punching. Since the C-Cut processing is a well-known technique, its description will be omitted.

Referring to FIG. 10H, the printing step is a step of printing a selected design, such as a predetermined shape or pattern, onto the resin layer 320 of the metal body 200, for example, using the digital printing method. In this case, the printing can be performed including all portions where the magnetic stripe tape 320' is attached.

That is, another embodiment of the present disclosure allows printing on both the upper and lower surfaces of the metal body 200.

Referring to FIG. 10I, the step of milling the card chip pocket is a step of processing the recessed groove 311 in the molding material 310. The worker processes the molding material 310 to form a recessed groove 311 on the upper end of the molding material 310, thereby processing the molding material into a shape for assembling the card chip 400.

Referring to FIG. 10J, the step of inserting the card chip is a step of assembling the card chip 400 onto the upper surface of the molding material 310. Here, the card chip 400 is formed by mounting a semiconductor chip 420 on a upper surface of a chip substrate 410 and is installed in the recessed groove 311 of the molding material 310 in a reverse direction. In this case, the molding material 310 and the card chip 400 are bonded using an adhesive means such as a hot melt or adhesive film.

In other words, the present disclosure enables the manufacturing of the metal card using the material harmless to the human body through the above process. Furthermore, by utilizing the metal body 200 itself as the secondary coil antenna, it is possible to increase the recognition distance characteristics.

The present disclosure is not limited to the above-described specific preferred embodiment, but may be variously modified by those skilled in the art to which the present disclosure pertains without departing from the gist of the present disclosure as defined by the following claims. In addition, these modifications are to fall within the scope of the following claims.

## Claims

1. A non-contact-type metal card, comprising:
a primary coil antenna (100) having a primary coil mounted on an antenna substrate; and
a metal body (200) made of a metal material, into which the primary coil antenna (100) and a card chip (400) are assembled,
wherein the metal body (200) has a slit that is opened on one side and extends in a loop shape, and forms a plurality of conductive paths partitioned and extending from each other by the slit to constitute a secondary coil.

2. The non-contact-type metal card of claim 1, wherein the metal body (200) further includes:
an opening (220) opened so that a card chip (400) is installed; and
a milling portion (240) forming an inward groove on a lower surface thereof, in which the primary coil antenna (100) is installed.

3. The non-contact-type metal card of claim 1, wherein the primary coil antenna (100) further includes a tuning capacitance portion (133) that is electrically connected to the antenna substrate (110) and compensates for a capacitance of the secondary coil.

4. The non-contact-type metal card of claim 3, wherein the tuning capacitance portion (133) is an MLCC-type chip capacitor or a pattern capacitor composed of an arrangement of an upper conductive pattern and a lower conductive pattern on the antenna substrate.

5. The non-contact-type metal card of claim 3, wherein the metal body (200) further includes a receiving groove (253) on the lower surface in which the tuning capacitance portion (133) is accommodated.

6. The non-contact-type metal card of claim 1, wherein the metal body (200) includes a first connection terminal (251) that electrically contacts the first connector terminal (131) and the second connector terminal (132) of the primary coil antenna (100), respectively, to form an end point of a loop-shaped primary coil (120) or a starting point of the secondary coil, and a second connection terminal (252) that forms an end point of the secondary coil.

7. The non-contact-type metal card of claim 6, wherein the first connection terminal (251) is a region of the starting point of the conductive path, and the second connection terminal (252) is a region of the end point of the conductive path and is partitioned to be insulated from other regions by a slit.

8. The non-contact-type metal card of claim 6, wherein the first connector terminal (131) is electrically connected to the first connection terminal (251), and the second connector terminal (132) is electrically connected to the second connection terminal (252), and
the electrical connection is made using any one of an anisotropic conductive paste (ACP) bonding method, an anisotropic conductive film (ACF) bonding method, a soldering method, and a conductive double-sided tape bonding method.

9. A method for manufacturing a non-contact-type metal card, comprising:
a) processing an opening (220) into which a card chip (400) is assembled in a metal body (200) and a slit extending in a loop shape from one side;
b) injecting a molding material (310) into the slit and opening (220) and molding the molding material (310), and forming a resin layer (320) on upper and lower surfaces of the metal body (200);
c) bonding a printing sheet (330) to the upper and lower surfaces of the metal body (200) on which the resin layer (320) is formed;
d) processing a recessed groove (311), which matches a shape of the card chip, in the molding material (310); and
e) assembling a card chip (400) on an upper surface of the molding material (310),
wherein, in step a), a conductive path, which is partitioned into a loop shape by the slit, is formed between a first connection terminal (251) that is electrically connected to a first connector terminal (131) of a primary coil antenna (100) and a second connection terminal (252) that is electrically connected to a second connector terminal (132) of the primary coil antenna by the slit extending in the loop shape from one side of the metal body (200).

10. A method for manufacturing a non-contact-type metal card, comprising:
a) processing an opening (220) into which a card chip (400) is assembled in a metal body (200) and a slit extending in a loop shape from one side;
b) injecting a molding material (310) into the slit and opening (220) and molding the molding material (310), and forming a resin layer (320) on upper and lower surfaces of the metal body (200);
c) bonding a printing sheet (330) to any one of the upper and lower surfaces of the metal body (200) on which the resin layer (320) is formed;
d) processing a recessed groove (311), which matches a shape of the card chip, in the molding material (310); and
e) assembling a card chip (400) on an upper surface of the molding material (310),
wherein, in step a), a conductive path, which is partitioned into a loop shape by the slit, is formed between a first connection terminal (251) that is electrically connected to a first connector terminal (131) of a primary coil antenna (100) and a second connection terminal (252) that is electrically connected to a second connector terminal (132) of the primary coil antenna by the slit extending in the loop shape from one side of the metal body (200).

11. The method of claim 9 or 10, wherein step a) further includes processing an inward milling portion (240) on the lower surface of the metal body (200) to accommodate the primary coil antenna (100) and a receiving groove (253) to accommodate the tuning capacitance portion (133).

12. The method of claim 9 or 10, wherein, in step a), the first connection terminal (251) is a starting point of the conductive path, and the second connection terminal (252) is an end point of the conductive path and is partitioned to be insulated from other regions by a slit.

13. A method for manufacturing a non-contact-type metal card, comprising:
processing an opening (220) into which a card chip is assembled in a metal body (200) and a slit extending in a loop shape from one side;
injecting a molding material (310) into the slit and opening and molding the molding material (310), and forming a resin layer (320) on upper and lower surfaces of the metal body (200);
forming the resin layer (320) on upper and lower surfaces of a metal card by injecting the molding material, and then processing the resin layer on the lower surface to form a milling groove (321);
bonding a magnetic stripe tape (320') to the milling groove (321) by a laminating method;
printing on the upper and lower surfaces of the metal body (200);
processing a recessed groove (311), which matches a shape of the card chip (400), in the molding material (310); and
assembling the card chip 400 on an upper surface of the molding material (310),
wherein, in the processing of the slit, a conductive path, which is partitioned into a loop shape by the slit, is formed between a first connection terminal (251) that is electrically connected to a first connector terminal (131) of a primary coil antenna (100) and a second connection terminal (252) that is electrically connected to a second connector terminal (132) of the primary coil antenna (100) by the slit extending in the loop shape from one side of the metal body (200).
